# EUROPÄISCHE PATENTANMELDUNG

(11) **EP 4 810 916 A1**
(43) Veröffentlichungstag der Anmeldung: **23.09.2026**
(21) Anmeldenummer: 25165187.3
(22) Anmeldetag: 20.03.2025
(51) Int. Cl.: G01C 21/34, G06Q 10/047, G06Q 10/083, G06Q 50/40

(54) **COMPUTERIMPLEMENTIERTES VERFAHREN FÜR EINEN SCHWERTRANSPORT UND VERFAHREN ZUM DURCHFÜHREN EINES SCHWERTRANSPORTS**

(71) Anmelder: Sommer, Helga, 48477 Hörstel-Dreierwalde (DE)
(72) Erfinder: Sommer, Helga, 48477 Hörstel-Dreierwalde (DE)
(74) Vertreter: Jeon, Jin

(57) **Zusammenfassung**

Bei einem computerimplementierten Verfahren für einen Schwertransport ist vorgesehen, dass Schwertransportdaten des Schwertransports erfasst werden, die mindestens eines von Folgenden enthalten: eine Länge, eine Breite, eine Höhe, einen Wendekreis, ein Gewicht und eine Achslast; dass ein geographischer Startpunkt des Schwertransports und eines geographischer Zielpunkts des Schwertransports erfasst werden; dass mehrere geographischen Stellen, die verknüpft sind mit Schwertransportdaten anderer Schwertransporte erfasst werden, die mit den Schwertransportdaten des Schwertransports korrespondieren; und dass ein Routenvorschlag erzeugt wird, der den Schwertransport von dem geographischen Startpunkt durch wenigstens eine der mehreren geographischen Stellen zu dem geographischen Zielpunkt führt.

## Beschreibung

### TECHNISCHER HINTERGRUND

Die vorliegende Erfindung betrifft das technische Gebiet des Schwertransportes. Insbesondere betrifft die vorliegende Erfindung die Aspekte der Routenplanung und Durchführung des Schwertransportes unter Verwendung von computerimplementierten Verfahren.

Bei einem Schwertransport werden Verkehrsbauwerke genutzt, die für den gewöhnlichen Güter- und Personentransport ausgelegt sind, in der Regel aber nicht für Schwertransporte. Insbesondere Verkehrsbauwerke wie beispielsweise Straßen, Brücken, Tunnel, Unterführungen, Zufahrten, Kreuzungen, Straßen mit Verkehrsinseln, Kreisverkehr und dergleichen sind in der Regel für den herkömmlichen Straßenverkehr ausgelegt.

Daher gilt es für Schwertransporte, zusätzliche Anforderungen zu erfüllen, die über die Vorschriften für den gewöhnlichen Güter- und Personentransport hinausgehen. Deshalb wird jeder Schwertransport einzeln geplant, genehmigt und durchgeführt.

Vom herkömmlichen Straßenverkehr unterscheiden sich Großraum- und Schwertransporte (GST) durch Schwertransportdaten (kurz: Transportdaten), die gesetzliche oder sonstige vorgeschriebene Zulassungsbedingungen für die Teilnahme am herkömmlichen Straßenverkehr nicht erfüllen. In der Bundesrepublik Deutschland sind diese Zulassungsbedingungen durch die Straßenverkehrs- und Zulassungsverordnung (StVZO) geregelt, insbesondere durch § 32 betreffend Abmessungen und § 34 betreffend Gewicht und Einzelachslast. Das Transportfahrzeug im Sinne der vorliegenden Offenbarung kann den Großraumtransport, den Schwertransport, den Großraum- und Schwertransport und/oder den Langtransport gemäß den Bestimmungen der StVZO oder der StVO (Straßenverkehrsordnung) betreffen. Sofern nicht anders angegeben, wird der Begriff "Transport" oder "Schwertransport" in der vorliegenden Offenbarung zusammenfassend für den Großraumtransport, den Schwertransport, den Großraum- und Schwertransport und den Langtransport verwendet. Mit Transportfahrzeug kann im Allgemeinen ein Schwertransportfahrzeug bezeichnet sein. Die Schwertransportdaten, insbesondere betreffend die Höhe, die Breite, die Länge, das Gesamtgewicht oder die Einzelachslast, können sich auf das Transportfahrzeug, auf das Transportgut oder auf die Kombination von beiden beziehen.

Bislang wird zur Routenplanungen für Großraum- und Schwertransporte zunächst ein initialer Routenvorschlag für die Durchführung eines Großraum- und Schwertransports von einem Startpunkt zu einem Zielpunkt erzeugt. Falls Hindernisse oder bauphysikalische Einschränkungen entlang der Strecke des initialen Routenvorschlags es nicht gestatten, dass der Großraum- und Schwertransports die gewünschte Route nimmt, muss ein anderer Routenvorschlag erarbeitet werden. Dieser Prozess muss gegebenenfalls iterativ wiederholt werden. Manche Routenvorschläge sind nur unter besonderem baulichen oder organisatorischem Aufwand durchführbar, beispielsweise durch das temporäre Entfernen von Hindernissen, durch Verbreitern der befahrbaren Fahrbahn oder durch das Sperren von Fahrbahnabschnitten für andere Verkehrsteilnehmer. Diese Maßnahmen sind zeitaufwändig und fehleranfällig und können zu kostenintensiven Verzögerungen führen.

Vor diesem Hintergrund stellt sich die technische Aufgabe, die Prozesse betreffend den Schwertransport hinsichtlich des Arbeits-, Kosten- und Zeitaufwands sowie hinsichtlich der Genauigkeit und Sicherheit zu verbessern, insbesondere um unpassierbare oder mit besonderem Aufwand verbundene Routen zu vermeiden.

### KURZZUSAMMENFASSUNG DER ERFINDUNG

Die technische Aufgabe wird durch den Gegenstand des Anspruchs 1 sowie durch den Gegenstand der nebengeordneten Ansprüche gelöst. Besonders vorteilhafte Ausführungsformen sind durch die abhängigen Ansprüche gegeben.

Erfindungsgemäß ist ein computerimplementiertes Verfahren für einen Schwertransports (kurz: einen Transport) vorgesehen. Das computerimplementierte Verfahren umfasst das Erfassen von Schwertransportdaten des Schwertransports. Das computerimplementierte Verfahren umfasst ferner das Erfassen eines geographischen Startpunkts des Schwertransports und eines geographischen Zielpunkts des Schwertransports. Außerdem umfasst das computerimplementierte Verfahren ein Erfassen von mehreren geographischen Stellen, die verknüpft sind mit Schwertransportdaten anderer Schwertransporte, die mit den Schwertransportdaten des Schwertransports korrespondieren. Von dem computerimplementierten Verfahren ist weiterhin das Erzeugen eines Routenvorschlags umfasst, welcher den Schwertransport von dem geographischen Startpunkt durch wenigstens eine der mehreren geographischen Stellen zu dem geographischen Zielpunkt führt. Das Erfassen der Schwertransportdaten kann zeitlich nach oder vor dem Erfassen von Start- und/oder Zielpunkt erfolgen. Es ist denkbar, dass das Erfassen der Schwertransportdaten und das Erfassen von Start- und/oder Zielpunkt simultan erfolgen. Das Erzeugen des Routenvorschlags erfolgt bevorzugt nach dem Erfassen der Schwertransportdaten, des Startpunkt und des Zielpunkts.

Die Transportdaten enthalten vorzugsweise mindestens eines von einer Länge, einer Höhe, einer Breite, einer Gesamtmasse, einer Achslast (oder einzelnen Achslasten bei einer ungleichmäßigen Achslastverteilung) und einem Kurvenverhalten des Schwertransports, insbesondere bezogen auf die Gesamtheit eines Transportfahrzeugs und dessen Transportgut. Das Kurvenverhalten kann einen statischen Wendekreis und/oder einen dynamischen Parameter gemäß einer Schleppkurvenanalyse enthalten. Diese Schwertransportdaten umfassen insbesondere wenigstens eines von Folgendem: ein Gesamtgewicht, das 18 Tonnen übersteigt, eine Einzelachslast, die 8 Tonnen oder 10 Tonnen übersteigt, eine Breite, die 2,55 Meter übersteigt, eine Höhe, die 4 Meter übersteigt; und eine Länge, die 15,5 Meter übersteigt. Die Schwertransportdaten können insbesondere diejenige oder diejenigen der vorgenannten Kennzahlen bezeichnen, die über den jeweils zulässigen Wert gemäß den Gesetzen und Verordnungen der jeweiligen Jurisdiktion (wie z.B. gemäß StVZO, StVO und StVG in der Bundesrepublik Deutschland) übersteigen (auch: Normtransportdaten).

Die Schwertransportdaten können vorzugsweise auf einen bestimmten Schwertransportbezogen sein. Der Schwertransport kann als Gefahrengut- und/oder Schwertransport bezeichnet sein. Die Schwertransportdaten können insbesondere ein Gesamtgewicht des Schwertransports definieren, welches 18 Tonnen, insbesondere 19,5 Tonnen, 20 Tonnen, 25 Tonnen, 28 Tonnen, 32 Tonnen, 35 Tonnen, 40 Tonnen, oder 44 Tonnen, übersteigt. Das Gesamtgewicht des Schwertransports kann bis zu 50 Tonnen, insbesondere bis zu 100 Tonnen, bis zu 500 Tonnen, bis zu 1000 Tonnen, bis zu 2500 Tonnen oder bis zu 5000 Tonnen, betragen.

Die Schwertransportdaten können alternativ oder zusätzlich eine Einzelachslast des Schwertransports definieren, welche 8 Tonnen oder 10 Tonnen, insbesondere 11,5 Tonnen, 16 Tonnen, 18 Tonnen, oder 20 Tonnen übersteigt. Die Einzelachslast des Schwertransports kann bis zu 20 Tonnen, insbesondere bis zu 50 Tonnen, bis zu 100 Tonnen oder bis zu 1000 Tonnen betragen.

Die Schwertransportdaten können alternativ oder zusätzlich eine Breite des Schwertransports sowie gegebenenfalls von dessen Transportgut definieren, welche 2,55 Meter übersteigt. Die Breite des Schwertransports kann mindestens 2,6 Meter, insbesondere mindestens 3 Meter, mindestens 3,5 Meter, mindestens 4 Meter oder mindestens 5 Meter, betragen. Die Breite des Schwertransports kann bis zu 4 Meter, insbesondere bis zu 5 Meter, bis zu 7 Meter, bis zu 10 Meter, bis zu 20 Meter, bis zu 50 Meter oder bis zu 100 Meter, betragen.

Die Schwertransportdaten können alternativ oder zusätzlich eine Höhe des Schwertransports definieren, welche 4 Meter übersteigt. Insbesondere kann die Höhe des Transportfahrzeugs 4,5 Meter, 5 Meter, 7 Meter, 10 Meter, 20 Meter oder 50 Meter übersteigen. Insbesondere kann die Höhe des Transportfahrzeugs bis zu 10 Meter, bis zu 20 Meter, bis zu 50 Meter, bis zu 100 Meter, bis zu 200 Meter oder bis zu 500 Meter betragen.

Die Schwertransportdaten können alternativ oder zusätzlich eine Länge des Schwertransports definieren, welche 15,5 Meter übersteigt. Insbesondere kann die Länge des Schwertransports 16,5 Meter, 18 Meter, 20 Meter, 25 Meter, 30 Meter, 40 Meter, 50 Meter, 100 Meter oder 200 Meter übersteigen. Insbesondere kann die Länge des Schwertransports bis zu 200 Meter, bis zu 300 Meter, bis zu 400 Meter, bis zu 500 Meter oder bis zu 1000 Meter betragen. Es ist zu beachten, dass für die Maße, die Gesamtmasse und die Achslast keine pauschalen Obergrenzen zu setzen sind, da diese durch die einzelnen Anforderungen des individuellen Transportvorhabens bestimmt werden.

Der Startpunkt und/oder der Zielpunkt, wie hierin verwendet, können sich jeweils auf eine geographische, geopolitische und/oder kartographische Position beziehen. Der Startpunkt und/oder der Zielpunkt können jeweils Koordinaten, insbesondere Satellitenkoordinaten, aufweisen. Beispielsweise können der Startpunkt und/oder der Zielpunkt mittels eines Geoinformationssystems ausgegeben werden. Alternativ oder zusätzlich können der Startpunkt und/oder der Zielpunkt eine jeweilige Adresse (politische, geographische und/oder kartographische Adresse) aufweisen. Hierin werden die Begriffe Startpunkt und Zielpunkt je nach Kontext im Sinne eines jeweiligen Ortes in der realen Welt und/oder im Sinne eines jeweiligen Datensatzes zur Speicherung, zum Zugriff, zur Ausgabe, Verarbeitung usw. durch eine Computereinrichtung verstanden.

Der Routenvorschlag wie hierin verwendet umfasst eine Wegstrecke von dem Startpunkt zu dem Zielpunkt speziell für den Schwertransport. Der Routenvorschlag kann eine Menge von (kontinuierlichen oder diskreten) geographischen, geopolitischen und/oder kartographischen Positionen aufweisen. Beispielsweise kann der Routenvorschlag mittels eines Geoinformationssystems ausgegeben werden. Der Routenvorschlag kann durch Geodaten georeferenziert sein oder werden. Beispielsweise können die Geodaten der Route Vektordaten, Rasterdaten, Shapefiles oder dergleichen umfassen. Zusätzlich oder alternativ kann der Routenvorschlag mit einem digitalen Geländemodell kombiniert sein. Der Routenvorschlag kann als ein Datensatz vorliegen. Der Routenvorschlag kann über eine Benutzerplattform wie beispielsweise eine digitale interaktive Karte erstellbar, speicherbar, abrufbar, modifizierbar und/oder simulierbar sein.

Der Routenvorschlag bezieht sich auf eine konkrete Strecke von einem Startpunkt zu einem Zielpunkt, die für die Durchführung des Schwertransports vorgeschlagen wird. Der Routenvorschlag kann anhand der kartographischen Darstellung der Teilmenge der Verkehrsbauwerke in der digitalen Karte erzeugt werden. Beispielsweise kann ein Algorithmus eine kürzeste Route, eine schnellste Route, eine Route mit am wenigsten Steigungen, eine am wenigsten befahrene Route oder dergleichen erstellen, die wenigstens eine der mehreren geographischen Stellen enthält.

Bei dem computerimplementierten Verfahren gemäß der vorliegenden Offenbarung werden vorzugsweise solche geographischen Stellen erfasst, an denen in der Vergangenheit ein Großraum- und/oder Schwertransport mit ähnlichen Schwertransportdaten durchgeführt wurde. Das Erfassen der geographischen Stellen kann insbesondere derart erfolgen, dass solche geographischen Stellen ausgewählt werden, für die, beispielsweise in einer Erfahrungsdatenbank abgespeicherte, Erfahrungsdaten bezüglich anderer Schwertransporte vorhanden sind, die mit den Schwertransportdaten des gegenständlichen Schwertransports korrespondieren. Korrespondierende Schwertransportdaten sind dadurch charakterisiert, dass sie, gegebenenfalls unter Zugrundelegung eines Toleranzbereichs, den Schwertransportdaten des gegenständlichen Schwertransports gleichen. Zusätzlich können korrespondierende Schwertransportdaten auch solche Schwertransportdaten umfassen, die stärker von Normtransportdaten abweichen als die Schwertransportdaten des gegenständlichen Schwertransports. Anders gesagt umfassen die korrespondierenden Schwertransportdaten bestimmter geographischer Stellen solche Schwertransportdaten, auf deren Basis mit Sicherheit oder zumindest einer als hinreichend groß betrachteten Wahrscheinlichkeit angenommen werden kann, dass auch der gegenständliche Schwertransport die jeweilige geographische Stelle passieren kann.

Das Erfassen der geographischen Stellen, die verknüpft sind mit Schwertransportdaten anderer Schwertransporte, welche mit den Schwertransportdaten des Schwertransports korrespondieren, wird vorzugsweise nach dem Erfassen der Schwertransportdaten durchgeführt. Insbesondere bei solchen Schwertransporten, die durch einen Satz von Schwertransportdaten des gegenständlichen Schwertransports definiert sind, kann es bevorzugt sein, dass zunächst der vollständigen Satz Schwertransportdaten des Schwertransports erfasst wird, bevor die geographischen Stellen ermittelt werden, die verknüpft sind mit Schwertransportdaten anderer Schwertransporte, welche mit den Schwertransportdaten des Schwertransports korrespondieren. Alternativ kann es vorgesehen sein, dass das Ermitteln der geographischen Stellen bereits vor dem Erfassen des vollständigen Satzes beginnt oder durchgeführt wird, nachdem wenigstens ein Schwertransportdatum des gegenständlichen Schwertransports erfasst wurde. Das Erfassen dieser geographischen Daten kann zeitlich nach oder vor dem Erfassen von Start- und/oder Zielpunkt erfolgen. Das Erzeugen des Routenvorschlags erfolgt bevorzugt nach dem Erfassen dieser geographischen Stellen.

Die Stelle, wie hierin verwendet, kann sich jeweils auf eine geographische, geopolitische und/oder kartographische Position beziehen. Die Stelle kann Koordinaten, insbesondere Satellitenkoordinaten, aufweisen. Beispielsweise kann die Stelle mittels eines Geoinformationssystems ausgegeben werden. Alternativ oder zusätzlich können kann die Stelle eine jeweilige Adresse (politische, geographische und/oder kartographische Adresse) aufweisen. Hierin wird der Begriff Stelle je nach Kontext im Sinne eines jeweiligen Ortes in der realen Welt und/oder im Sinne eines jeweiligen Datensatzes zur Speicherung, zum Zugriff, zur Ausgabe, Verarbeitung usw. durch eine Computereinrichtung verstanden.

Stellen, die verknüpft sind mit Schwertransportdaten anderer Schwertransporte, können als verifizierte Schwertransportdaten oder Erfahrungsdaten bezeichnet sein. Vorzugsweise sind die anderen Schwertransporte in der Vergangenheit, d.h. vor Durchführung des computerimplementierten Verfahrens oder zumindest vor dessen Schritt des Erfassens der geographischen Stellen, durchgeführte Schwertransporte (verifizierte Schwertransporte). Die anderen Schwertransporte kann eine Vielzahl anderer Schwertransporte umfassen. Vorzugsweise können die andere Schwertransporte eine Anzahl von wenigstens 5 oder wenigstens 10, insbesondere wenigstens 20, vorzugsweise wenigstens 50, besonders bevorzugt wenigstens 100 anderer Schwertransporte umfassen. Jedem der anderen Schwertransporte kann eine jeweilige Route zugeordnet sein, wobei diese Routen untereinander zumindest teilweise unterschiedlich sein können. Insbesondere können den anderen Schwertransporten jeweilige Routen zugeordnet sein, die nicht identisch sind mit dem Routenvorschlag, der in dem computerimplementierten Verfahren erzeugt wird. Jeder der anderen Schwertransporte ist mit wenigstens einem Schwertransportdatum, insbesondere mit jeweiligen Schwertransportdaten, vorzugsweise mit einem jeweiligen Satz an Schwertransportdaten verknüpft. Insbesondere kann jeder der durchgeführter Schwertransport ist verknüpft sein mit je wenigstens einem Schwertransportdatum und wenigstens einer Route.

Von dem computerimplementierten Verfahren ist weiterhin das Erzeugen eines Routenvorschlags umfasst, welcher den Schwertransport von dem geographischen Startpunkt durch wenigstens eine der mehreren geographischen Stellen zu dem geographischen Zielpunkt führt. Vorzugsweise wird ein Routenvorschlag erzeugt, der durch eine Vielzahl von geographischen Stellen führt, die mit Schwertransportdaten verknüpft sind, wobei insbesondere entlang der Route aufeinanderfolgende geographische Stellen der Vielzahl einen Abstand von wenigstens 100 m, vorzugsweise wenigstens 500 m, insbesondere wenigstens 1.000 m aufweisen. Die Vielzahl von geographischen Stellen des Routenvorschlags kann wenigstens 10, wenigstens 20 oder wenigstens 50, insbesondere wenigstens 100 oder wenigstens 200, vorzugsweise durch wenigstens 500 oder wenigstens 1000, geographische Stellen umfassen, die mit verifizierten Schwertransportdaten verknüpft sind. Es kann bevorzugt sein, dass ein Routenvorschlag erzeugt wird, der zu wenigstens 30%, insbesondere zu wenigstens 50% vorzugsweise zu wenigstens 60%, besonders bevorzugt zu wenigstens 75% oder wenigstens 90%, durch geographische Stellen mit verifizierten Schwertransportdaten führt.

Indem das computerimplementierte Verfahren für einen Schwertransport einen Routenvorschlags erzeugt, der mehrere geographische Stellen verwendet, die mit verifizierten Schwertransportdaten verknüpft sind, welche zu den Schwertransportdaten korrespondieren, die den Schwertransport auszeichnen, auf den sich der Routenvorschlag bezieht, kann vermeiden werden, dass der Schwertransport bei seiner Durchführung auf ein unpassierbares Hindernis trifft. Durch das Führen des Schwertransport entlang von geografischen Stellen mit verifizierten Schwertransportdaten kann unnötiger beispielsweise baulicher Aufwand zum temporären Ertüchtigen von Streckenabschnitten vermieden werden.

Gemäß einer bevorzugten Ausführung des computerimplementierten Verfahrens umfasst das Erfassen der mehreren geografischen Stellen umfasst, dass die mehreren geografischen Stellen derart ausgewählt werden, dass jeder geografische Stelle wenigstens ein korrespondierendes Schwertransportdatum zugeordnet ist. Optional kann der Schwertransport durch einen ersten Satz von Transportdaten charakterisiert sein (damit verknüpft sein), der zwei oder mehr von folgendem enthalten: eine Länge, eine Breite, eine Höhe, einen Wendekreis, ein Gewicht und eine Achslast. Insbesondere werden die mehreren geographischen Stellen derart selektiert, dass mit jeder dieser geographischen Stellen zumindest ein Transportdatum ausgewählt aus der Liste enthaltend eine Länge, eine Breite, eine Höhe, einen Wendekreis, ein Gewicht und eine Achslast verknüpft ist, das zu einem Schwertransportdatum des Schwertransports korrespondiert. Optional kann wenigstens eine der mehreren geographischen Stelle mit zwei oder mehr Transportdaten verknüpft sein, die mit den Transportdaten des Schwertransports korrespondieren.

Bei einer bevorzugten Weiterbildung ist der Schwertransport durch einen ersten Satz von Transportdaten charakterisiert (damit verknüpft), der zwei oder mehr von folgendem enthalten: eine Länge, eine Breite, eine Höhe, einen Wendekreis, ein Gewicht und eine Achslast, und das Erfassen der mehreren geografischen Stellen umfasst, dass die mehreren geografischen Stellen derart ausgewählt werden, dass jeder dieser geografischen Stellen ein jeweiliger zweiter Satz von korrespondierenden Schwertransportdaten zugeordnet ist. Vorzugsweise wird das Erfassen der geographischen Stellen beschränkt auf solche Stellen, die mit einem Satz von verifizierten Schwertransportdaten verknüpft sind, der vollständig kompatibel ist mit dem Satz von Schwertransportdaten, der den Schwertransport charakterisiert.

Bei einer Weiterbildung des computerimplementierten Verfahrens, die mit den vorigen Ausführungen und Weiterbildungen kombinierbar ist, ist ein korrespondierendes Schwertransportdatum einer geografischen Stelle um nicht mehr als eine vorbestimmte Toleranz, beispielsweise nicht mehr als 5%, insbesondere nicht mehr als 10%, vorzugsweise nicht mehr als 25%, kleiner ist als das entsprechende Schwertransportdatum des Schwertransports. Wenn beispielsweise ein Schwertransport verknüpft ist mit einer Länge X, werden bei einer zulässigen Toleranz von bis zu 25% solche geographische Stellen erfasst, die verknüpft sind mit einer Länge von 75% der Länge X oder mehr. Optional umfasst ein korrespondierender Satz verifizierter Schwertransportdaten einer geografischen Stelle zwei oder mehr, insbesondere nur solche, Schwertransportdaten, die jeweils nicht mehr als 2%, insbesondere nicht mehr als 5%, vorzugsweise nicht mehr als 10%, besonders bevorzugt nicht mehr als 15%, kleiner sind als das jeweils entsprechende Schwertransportdatum des Satzes Schwertransportdaten des Schwertransports.

Bei einer Weiterbildung des computerimplementierten Verfahrens, die mit den vorigen Ausführungen und Weiterbildungen, kombinierbar ist, weicht wenigstens ein korrespondierendes Schwertransportdatum einer geografischen Stelle einer geografischen Stelle wenigstens genauso stark von einem vorbestimmten Normtransportdatum ab, wie das entsprechende Schwertransportdatum des Schwertransports. Wenn beispielsweise ein Schwertransport verknüpft ist mit einer Länge X, werden solche geographische Stellen erfasst, die verknüpft sind mit der Länge X oder mehr. Optional umfasst ein korrespondierender Satz verifizierter Schwertransportdaten einer geografischen Stelle zwei oder mehr, insbesondere nur solche, Schwertransportdaten, die jeweils wenigstens genauso stark von einem vorbestimmten Normtransportdatum abweichen, wie das entsprechende Schwertransportdatum des Schwertransports.

Bei manchen Ausführungen kann ein korrespondierender Satz verifizierter Schwertransportdaten einer geografischen Stelle wenigstens ein erstes verifiziertes Transportdatum aufweisen, das nicht mehr als eine vorbestimmte Toleranz von beispielsweise 5% kleiner ist als das entsprechende erste Schwertransportdatum des Schwertransports, und wenigstens ein zweites verifiziertes Transportdatum aufweisen, das wenigstens genauso stark von einem vorbestimmten Normtransportdatum ab, wie das entsprechende zweite Schwertransportdatum des Schwertransports.

Bei einer bevorzugten Ausführung des computerimplementierten Verfahrens wird wenigstens ein Filterparameter bestimmt. Insbesondere wird wenigstens ein Ausschlussparameter bestimmt. Der wenigstens eine Filterparameter kann vorzugweise bezogen werden auf wenigstens ein geographisches Gebiet. Alternativ oder zusätzlich kann der wenigstens eine Filterparameter bezogen werden auf wenigstens einen Zeitraum.

Ein Filterparameter wird insbesondere definiert als ein für das Erzeugen des Routenvorschlags qualitativ zu berücksichtigender Parameter. Beispielsweise kann ein Filterparameter bezogen werden auf einen Zeitraum, innerhalb dessen die anderen (verifizierten) Schwertransporte durchgeführt wurden, deren Schwertransportdaten mit den geographischen Stellen verknüpft werden, wobei beispielsweise jüngere Schwertransportdaten stärker gewichtet werden als ältere. Alternativ oder zusätzlich kann beispielsweise ein Filterparameter in Bezug darauf definiert werden, dass eine Anzahl unterschiedlicher vorbestimmter geographischer Gebiete, wie Gebirgsgebiete, minimiert wird. Der Ausschlussparameter wird definiert als ein für das Erzeugen des Routenvorschlags zwingend zu berücksichtigender Parameter. In dem computerimplementierten Verfahren können beispielsweise ausschließlich verifizierte Schwertransportdaten aus einem bestimmten Zeitraum mit den geographischen Stellen verknüpft werden. Ein Ausschlussparameter kann beispielsweise dergestalt definiert werden, dass wenigstens ein vorbestimmtes geographisches Gebiet zwingend zu umfahren ist, beispielsweise ein Gebirgsgebiet, ein Wasserschutzgebiet oder ein politisches Gebiet. Das Berücksichtigen von Filterparametern, insbesondere Ausschlussparametern, kann dabei unterstützen, unpassierbare Hindernisse oder besonders aufwändige Passagen zu vermeiden.

Bei einer Weiterbildung eines computerimplementierten Verfahrens umfasst das das Erfassen der mehreren geografischen Stellen, dass diesen Stellen zugeordnete Schwertransportauflagen erfasst werden. Schwertransportauflagen können beispielsweise besonderem bauliche und/oder organisatorische Maßnahmen betreffen, wie das temporäre Entfernen von Hindernissen, das Verbreitern der befahrbaren Fahrbahn oder das Sperren von Fahrbahnabschnitten für andere Verkehrsteilnehmer. Der wenigstens eine Filterparameter, insbesondere der wenigstens eine Ausschlussparameter, kann auf wenigstens eine vorbestimmte Schwertransportauflage bezogen sein.

Bei einer bevorzugten Ausführung des computerimplementierten Verfahrens umfasst das Erfassen der mehreren geografischen Stellen, dass mehrere Routen anderer (verifizierter) Schwertransporte, die assoziiert sind mit jeweiligen Schwertransportdaten sowie gegebenenfalls Schwertransportauflagen und/oder Zeiträumen, segmentiert werden in eine Vielzahl von Streckenabschnitten. Die Streckenabschnitte können beispielsweise punktförmig sein. Diese Streckenabschnitte werden den Stellen mit der gleichen geographischen Position zugeordnet. Um einen Streckenabschnitt zu einer geographischen Position zuzuordnen, kann ein Raster aus einer Vielzahl insbesondere gleichförmiger Felder gebildet werden, wobei eine jeweilige Stelle mit einem bestimmten Feld assoziiert werden kann und wobei die in diesem Feld angeordneten Streckenabschnitte dieser Stelle zugeordnet werden. Das Raster kann beispielsweise aus Polygonen, insbesondere gleichgroßen Polygonen, wie insbesondere gleichseitige Dreiecke, Vierecke, wie Rechtecke, Parallelogramme, Quadrate oder Rauten, oder insbesondere gleichseitige Sechsecke, gebildet sein, insbesondere daraus bestehen. Ein Polygon kann durch eine charakteristische Länge definiert sein. Es kann bevorzugt sein, dass die charakteristische Länge der Polygone des Rasters skalierbar ist, insbesondere abhängig, beispielsweise proportional zu, einem Maßstab der digitalen Karte.

Bei einer Weiterbildung eines computerimplementierten Verfahrens, die das definieren von Streckenabschnitten und deren Zuordnung zu Stellen mit der gleichen, insbesondere derselben, geographischen Position, umfasst das Erfassen der mehreren geografischen Stellen, dass eine Teilmenge von den Streckenabschnitten gebildet wird, deren Schwertransportdaten mit den Schwertransportdaten des Schwertransports korrespondieren.

Bei einer anderen, mit der vorigen kombinierbaren Weiterbildung eines computerimplementierten Verfahrens, die das Definieren von Streckenabschnitten und deren Zuordnung zu Stellen mit der gleichen geographischen Position umfasst, umfasst das Erfassen der mehreren geografischen Stellen, dass den Stellen ein jeweiliger Konfidenzwert zugeordnet wird, der zur Menge der Streckenabschnitte korreliert, deren Schwertransportdaten mit den Schwertransportdaten des Schwertransports korrespondieren. Der Konfidenzwert einer Stelle kann insbesondere korrespondieren zur Menge der Streckenabschnitte in dem Feld dieser Stelle innerhalb des Rasters.

Bei einer Weiterbildung eines computerimplementierten Verfahrens, bei dem Konfidenzwerte bestimmt, insbesondere berechnet, werden, umfasst das Erzeugen des Routenvorschlags das Berücksichtigen der Konfidenzwerte der mehreren geografischen Stellen als, insbesondere additive, multiplikative oder konkave, Metrik. Die Konfidenzwerte können beispielsweise als additive Metrik berücksichtigt werden, wobei ein höherer Metrikwert einen Routenvorschlag mit besonders verlässlichen Erfahrungswerten repräsentieren kann. Beispielsweise kann der mathematische Kehrwehrt der Konfidenzwerte als konkave Metrik berücksichtigt werden, wobei ein niedriger Metrikwert geringere Kollisionswahrscheinlichkeit mit Hindernissen repräsentieren kann.

Eine Ausführung des computerimplementierten Verfahrens, die mit den vorigen Ausführungen und Weiterbildungen kombinierbar ist, umfasst ferner ein kartographisches Darstellen von Verkehrsbauwerken in einer digitalen Karte. Vorzugsweise werden in der digitalen Karte der geographische Startpunkt, insbesondere der Routenvorschlag, und der geographische Zielpunkts dargestellt. Zusätzlich oder alternativ werden in der digitalen Karte wenigstens ein Filterparameter, insbesondere wenigstens ein Ausschlussparameter, bezogen auf wenigstens ein geographisches Gebiet dargestellt werden. Optional können zusätzlich oder alternativ werden die unterschiedlichen den Verkehrsbauwerken zugeordneten Konfidenzwerte in der digitalen Karte grafisch dargestellt werden.

Ein kartographisches Darstellen oder eine kartographische Darstellung wie hierin verwendet, bezieht sich auf einen Vorgang oder dessen Ergebnis, Informationen geographisch referenziert in einer digitalen Karte darzustellen.

Insbesondere werden dabei Verkehrsbauwerke, einschließlich Straßen, in der digitalen Karte geographisch referenziert dargestellt. Die digitale Karte kann basierend von Geobasisdaten und Geofachdaten generiert werden und/oder von einem Kartendienst erhalten werden. Beispielsweise kann die digitale Karte, und/oder die interaktive digitale Karte wie nachstehend erläutert, durch das kommerziell erhältlichen Produkt der Serie AGNES (eingetragene Marke) der Sommer Gruppe bereitgestellt sein.

Daten, insbesondere Schwertransportdaten, von verifizierten Schwertransporten, die mit geographischen Stellen verknüpft sind, können beispielsweise aus einer Erfahrungsdatenbank bereitgestellt werden, mit deren Hilfe ein Verfahren zur Routenplanung durchgeführt werden kann. Daten, insbesondere Schwertransportdaten, von verifizierten Schwertransporten, die mit geographischen Stellen verknüpft sind, können in einer Datenstruktur bereitgestellt werden, die zur kartographischen Darstellung in einer digitalen Karte eingerichtet sind.

Eine digitale Karte kann eine digitale, verkleinerte Darstellung eines geographischen oder topographischen Gebietes abbilden. Vorzugsweise werden die Streckeninformationen eingebettet in der digitalen, verkleinerten Darstellung eines geographischen oder topographischen Gebietes dargestellt. Das in der Karte dargestellte Gebiet kann vordefiniert sein. Beispielsweise kann die Karte das Gebiet der Bundesrepublik Deutschland, von Europa, oder ein beliebiges anderes Gebiet der Welt darstellen. Ein Gebiet kann beispielsweise ein politisches Gebiet, wie ein Land, ein Bundesland, ein Landkreis, oder ein Zuständigkeitsgebiet einer Behörde, wie einer Polizeibehörde oder eines Straßenbaulastträgers sein. Die Karte kann beispielsweise Straßen, Wege, Bahnlinien, Verläufe von Gewässern, Höhenprofile, politische oder sonstige Gebietsgrenzen beinhalten. Beispielsweise kann die Karte zwischen unterschiedlichen Straßentypen grafisch differenzieren. Straßentypen umfassen zum Beispiel Autobahnen, autobahnähnliche Straßen, Fernverkehrsstraßen, Straßen, Autostraßen, Europa-, Bundes-, Land-, Staats-, Kreis-, Gemeinde- und Ortsstraßen, Ortsdurchfahrt, Feld- und Waldwege, Fahrradwege, Fußwege und/oder Fußgängerzonen. Des Weiteren können die Straßen nach Straßenkategorien, nach Straßenbaulastträger oder nach gesetzlichen Regelungen eingeteilt sein.

Die Karte wird als eine digitale Karte bereitgestellt. Die Karte kann eine Rasterkarte oder eine Vektorkarte sein. Die Karte kann insbesondere als online-Karte in dem virtuellen Datenraum von einem und/oder über ein Netzwerk, von einem Server, von einem Cloudspeicher oder sonstigen Einrichtungen abgerufen werden. Die Karte kann als eine einzige Karte bereitgestellt werden und/oder aus mehreren Karten oder Kartenabschnitten zusammengesetzt werden.

Gemäß einer Ausführungsform wird eine interaktive digitale Karte bereitgestellt, die eingerichtet ist, Benutzereingaben zur Veränderung der Streckeninformationen gemäß eines Routenvorschlags in einer interaktiven Art und Weise kartographisch wiederzugeben. Der Ausdruck "interaktiv" wie hierin verwendet bezieht sich darauf, dass ein Benutzer eine Eingabe bezüglich einer maschinell dargestellten Information, beispielsweise einem Startpunkt, einem Zielpunkt, einem Filterkriterium und/oder einem Ausschlusskriterium, tätigen kann, woraufhin eine Maschine, z.B. eine Computereinrichtung, die dargestellte Information gemäß der Eingabe verändert und die veränderte Information wiedergibt. Somit bietet das Verfahren den Benutzern die Möglichkeit zum Beispiel einen Startpunkt, einen Zielpunkt, ein Filterkriterium und/oder ein Ausschlusskriterium in der kartographischen Darstellung in der digitalen Karte zu verändern und modifizieren, wobei insbesondere das Ergebnis unmittelbar (d.h. in Echtzeit oder in nahezu Echtzeit) für einen Benutzer dargestellt werden kann. Dadurch werden die Prozesse für die Einrichtung, Steuerung, Prüfung und Durchführung des Schwertransports vereinfacht.

Gemäß einer Ausführung des computerimplementierten Verfahrens, die mit den vorigen Ausführungen und Weiterbildungen kombinierbar ist, wird ein initialer Routenvorschlag erzeugt, der den Schwertransport von dem geographischen Startpunkt unabhängig von den Schwertransportdaten des Schwertransports und/oder unabhängig von den geographischen Stellen zu dem geographischen Zielpunkt führt, und wobei das Erzeugen des Routenvorschlags auf Basis des initialen Routenvorschlags erfolgt. Es ist denkbar, dass zunächst ein initialer Routenvorschlag für eine vom Startpunkt zum Zielpunkt führende Strecke erstellt wird, ohne Schwertransportdaten und/oder ohne mit verifizierten Schwertransportdaten verknüpfte geographische Stellen zu berücksichtigen. Beispielsweise kann ein Algorithmus eine kürzeste Route, eine schnellste Route, eine Route mit am wenigsten Steigungen, eine am wenigsten befahrene Route oder dergleichen erstellen, die den initialen Routenvorschlag definiert.

Eine Ausführung des computerimplementierten Verfahrens, die mit den vorigen Ausführungen und Weiterbildungen kombinierbar ist, umfasst ferner das Speichern des Routenvorschlags als einen ersten Datensatz mit einer ersten Datenstruktur, die zur kartographischen Darstellung in der digitalen Karte eingerichtet ist, und /oder das Speichern des Routenvorschlags als einen zweiten Datensatz mit einer zweiten Datenstruktur, die eingerichtet ist, ein elektronisches Dokument mit Zeichenfolgen zu füllen.

Insbesondere kann der Routenvorschlag in einer zweiten Datenstruktur gemäß einer Auszeichnungssprache (Markup Language, ML) bereitgestellt werden. Die zweite Datenstruktur kann in einem Format vorliegen, das sowohl von einem menschlichen Benutzer als auch von einer Computereinrichtung lesbar ist. Beispiele für die Auszeichnungssprache umfassen insbesondere Procedural Markup Language (PML), wie z.B. TeX, PDF, Postscript und PCL, und jede beliebige Descriptive Markup Language (DML), wie z.B. SGML, XML, HTML, DocBook, TEI, MathML, WML oder SVG. Diese Beispiele sind nicht abschließend und grundsätzlich kommt jede beliebige Maschinensprache in Betracht, die für die digitale Darstellung einer Zeichenfolge in einem elektronischen Dokument geeignet ist.

Eine Zeichenfolge wie hierin verwendet kann ein einzelnes Zeichen oder eine endliche Folge von mehreren Zeichen umfassen. Ein Zeichen kann insbesondere ein alphanumerisches Zeichen sein. Ferner kann das Zeichen ein Zeichen einer beliebigen Fremdsprache sein. Die Zeichenfolge kann dem englischen Fachbegriff "String" entsprechen. Die Zeichenfolge kann insbesondere eingerichtet sein, in einem elektronischen Dokument (insbesondere in einem Online-Formular) als solches dargestellt zu werden. Beispiele für ein elektronisches Dokument umfassen grundsätzlich jedes elektronische Dokument in einer geeigneten Maschinen- oder Auszeichnungssprache, insbesondere ein XML-Dokument, ein HTML-Dokument und ein PDF-Dokument.

Die Erfindung betrifft auch ein Verfahren zum Durchführen eines Großraum- und/oder Schwertransports (Transportverfahren) gemäß dem Routenvorschlag, der mit dem computerimplementiertes Verfahren nach einem der vorstehenden Ansprüche erzeugt wurde. Das Verfahren zum Durchführen eines Großraum- und/oder Schwertransports umfasst das oben beschriebene Verfahren für einen Großraum- und/oder Schwertransport (Routenplanungsverfahren). Im Zuge des Transportverfahrens wird das Routenplanungsverfahren durchgeführt. Gemäß dem erfindungsgemäßen Verfahren zum Durchführen eines Großraum- und/oder Schwertransports verkehrt ein Schwertransportfahrzeug entlang der Strecke, die zu einem mit dem Verfahren erzeugten, Routenvorschlag korrespondiert. Das Bereitstellen des Routenvorschlags, welcher die Strecke definiert, entlang welcher der Transport durchgeführt wird, erfolgt vorzugsweise, bevor das Transportfahrzeug, insbesondere in einem Fahrzeugverband mit einem oder mehreren Begleitfahrzeugen, entlang dieser vorbestimmten Strecke verkehrt.

Um die Sicherheit für Schwertransporte und andere Verkehrsteilnehmer zu erhöhen, können Transportfahrzeuge beim Durchführen des Transportverfahrens von einem oder mehreren Begleitfahrzeugen begleitet werden. Das Schwertransportfahrzeug und dessen Begleitfahrzeug oder Begleitfahrzeuge bilden einen Fahrzeugverband. Das wenigstens ein Begleitfahrzeug kann zur Wahrnehmung hilfspolizeilicher Aufgaben eingesetzt werden. Beispielsweise kann ein Begleitfahrzeug dazu eingesetzt werden, einen Zufahrtsweg zu der vorbestimmten Strecke, auf welcher sich der Schwertransport bewegt, zeitweise zu versperren. Beispielsweise kann als eine Schwertransportauflage bestimmt sein, dass ein Verband wenigstens ein Begleitfahrzeug zum Absichern des Transportfahrzeugs oder bestimmter Stellen entlang der Route und/oder zum Warnen von anderen Verkehrsteilnehmern umfasst.

Das hierin offenbarte computerimplementierte Verfahren ermöglicht, die Prozesse betreffend insbesondere die Einrichtung, Steuerung und Durchführung eines Schwertransports automatisch mit verringertem Aufwand und verringerter Fehleranfälligkeit durchzuführen. Auf diese Weise werden die Prozesse betreffend den Schwertransport vereinfacht. Dadurch können Arbeits-, Zeit- und Kostenaufwand für den Schwertransport gesenkt werden. Insbesondere kann die Verkehrsinfrastruktur vor Schäden oder übermäßiger Belastung geschützt werden.

Das computerimplementierte Verfahren kann als eine Zusammenstellung von Anweisungen (Instruktionen) bereitgestellt sein, die durch eine Computereinrichtung oder mehrere Computereinrichtungen in einem verteilten System ausführbar sind. Die Computereinrichtung wie hierin verwendet kann eine Vorrichtung mit einer Datenverarbeitungskapazität sein, die zur Ausführung des hierin offenbarten computerimplementierten Verfahrens geeignet ist. Mit anderen Worten ist die Computereinrichtung mit einer Rechenleistung (oder Prozessorleistung) ausgestattet, die ausreichend für die Ausführung des computerimplementierten Verfahrens ist.

Das verteilte System wie hierin verwendet bezeichnet ein verteiltes System gemäß den Lehren der Informatik. Demnach kann ein verteiltes System einen Zusammenschluss unabhängiger Computereinrichtungen bezeichnen, sodass die unabhängigen Computereinrichtungen ein einziges System für einen Benutzer oder mehrere darstellen. Alternativ oder zusätzlich kann ein verteiltes System eine Menge interagierender Prozesse oder Prozessoren sein, die über keinen gemeinsamen Speicher verfügen und über Nachrichten miteinander kommunizieren. Ferner kann das verteilte System hierin gemäß den Lehren aus den Gebieten des Verteilten Rechnens oder der verteilten Verarbeitung (Distributed Computing) verstanden und verwendet werden.

Die Computereinrichtung oder die mehreren Computereinrichtungen des verteilten Systems können mit einem elektronischen Speicher ausgestattet sein, der zum Zwischen- oder dauerhaften Speichern des computerimplementierten Verfahrens als Ganzes geeignet ist, und/oder zum Zwischen- oder dauerhaften Speichern von Daten zur Ausführung des computerimplementierten Verfahrens geeignet ist.

Das computerimplementierte Verfahren kann so bereitgestellt sein, dass es ausführbar in einem verteilten System ist. Das verteilte System kann dazu eingerichtet sein, das Optimierungsverfahren auszuführen. Insbesondere kann das verteilte System wie vorstehend erläutert ausgestaltet sein. Das verteilte System kann mehrere Computereinrichtungen umfassen. Die Computereinrichtungen können PCs, mobile Endgeräte und/oder mobile Computereinrichtungen wie Tablets umfassen.

### KURZBESCHREIBUNG DER ZEICHNUNGEN

Die Erfindung wird anhand von einzelnen Ausführungsbeispielen in Verbindung mit den beiliegenden Zeichnungen ausführlich beschrieben.
- Fig. 1: zeigt eine schematische Darstellung einer Ausführung des computerimplementierten Verfahrens für einen Großraum- und/oder Schwertransports.
- Fig. 2: zeigt eine schematische kartographische Darstellung eines Routenvorschlags, der mit dem computerimplementierten Verfahren erzeugt wurde.
- Fig. 3: zeigt eine andere schematische kartographische Darstellung eines Routenvorschlags, der mit dem computerimplementierten Verfahren erzeugt wurde.
- Fig. 4: zeigt eine schematische Darstellung eines Schwertransports mit Transportdaten gemäß einem Beispiel.

### AUSFÜHRLICHE BESCHREIBUNG

In der nachfolgenden Beschreibung bevorzugter Ausführungen anhand der Figuren werden für dieselben oder ähnliche Elemente verschiedener Ausführungsformen dieselben oder ähnliche Bezugszeichen verwendet, um die Lesbarkeit zu vereinfachen.

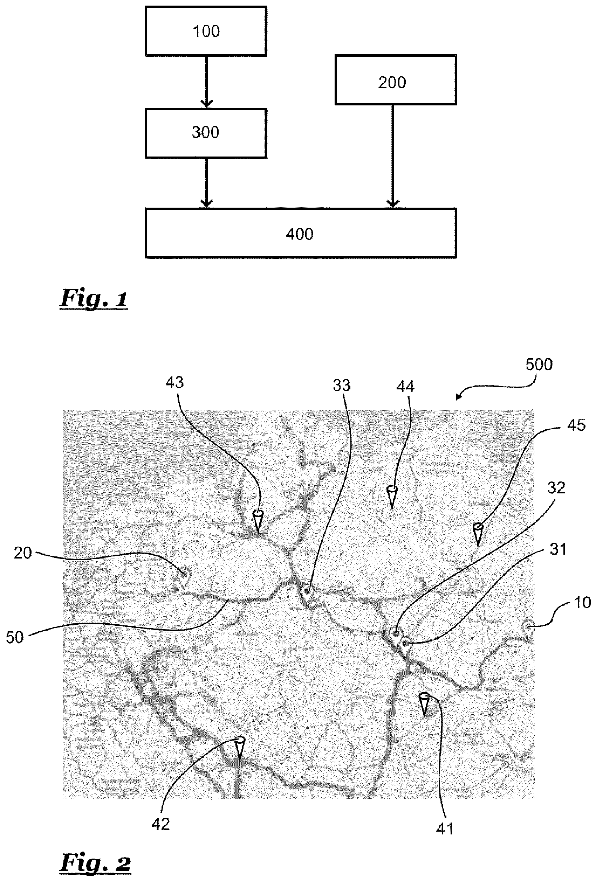

Fig. 1 zeigt eine schematische Darstellung einer Ausführung des computerimplementierten Verfahrens für einen Großraum- und/oder Schwertransports.

Bei dem computerimplementierten Verfahren für einen Schwertransport werden in einem ersten Erfassungsschritt 100 Schwertransportdaten des Schwertransports erfasst, die mindestens eines von Folgenden enthalten: eine Länge, eine Breite, eine Höhe, einen Wendekreis, ein Gewicht und eine Achslast. In einem zweiten Erfassungsschritt 200 werden ein geographischer Startpunkt und eines geographischer Zielpunkt des Schwertransports erfasst. In einem weiteren Ermittlungs- oder Erfassungsschritt 300 werden mehrere geographischen Stellen erfasst (ermittelt), die verknüpft sind mit Schwertransportdaten anderer Schwertransporte, die mit den Schwertransportdaten des Schwertransports korrespondieren. Schließlich wird bei dem computerimplementierten Verfahren für einen Schwertransport in einem Erzeugungsschritt 400 ein Routenvorschlag erzeugt, der den Schwertransport von dem geographischen Startpunkt durch wenigstens eine der mehreren geographischen Stellen zu dem geographischen Zielpunkt führt.

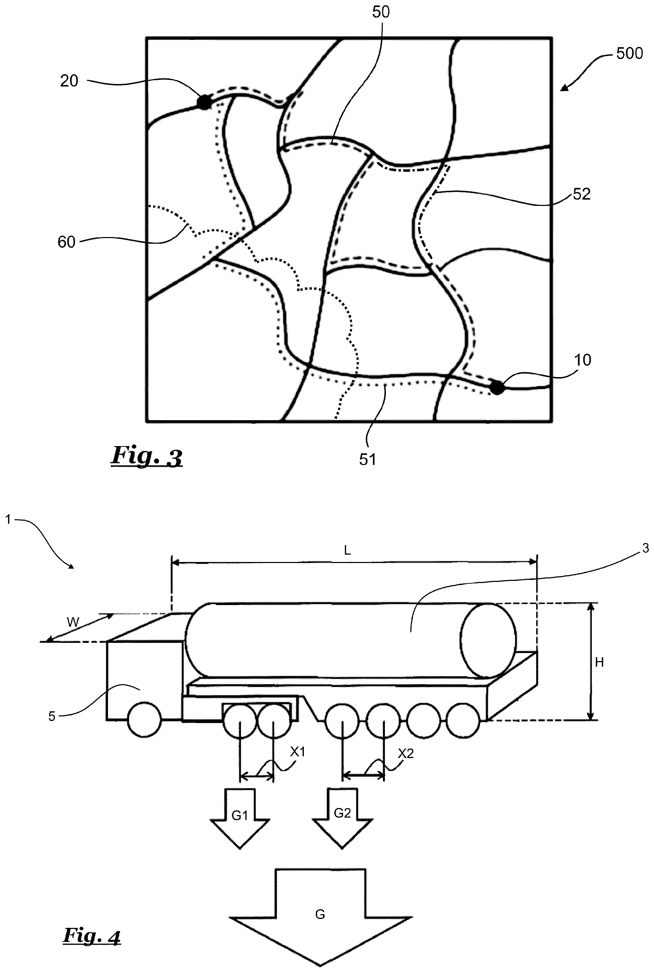

Fig. 4 zeigt eine schematische Darstellung eines Schwertransports 1 gemäß einem Beispiel. In Fig. 4 werden insbesondere die Schwertransportdaten des Schwertransports 1 anschaulich dargestellt.

Der Schwertransport 1 umfasst ein Transportgut 3 und ein Transportfahrzeug 5. Das Transportfahrzeug 5 umfasst eine Zugmaschine und einen Auflieger, der eine Ladefläche zum Tragen des Transportguts 3 aufweist. In diesem Beispiel wird die Gesamtheit des Transportguts 3 und des Transportfahrzeugs 5 als den Schwertransport 1 bezeichnet. Der Schwertransport 1 weist eine Länge L, eine Höhe H, eine Breite W und eine Gesamtmasse G auf. Ferner weist der Schwertransport 1 mehrere Achsen mit einer jeweiligen Achslast G1, G2 auf, wobei in Fig. 4 nur zwei von insgesamt sieben Achslasten dargestellt sind. Die Länge L, Höhe H, Breite B und Gesamtmasse G sowie die Achslasten G1, G2 zählen zu den Transportdaten des Schwertransports 1. Ferner können Achsabstände X1, X2 (wobei in Fig. 4 nur zwei von insgesamt sechs Achsabständen dargestellt sind) und das Kurvenverhalten des Schwertransports 1 zu den Transportdaten des Schwertransports 1 zählen.

Fig. 2 zeigt eine schematische kartographische Darstellung eines Routenvorschlags 50, der mit dem computerimplementierten Verfahren erzeugt wurde. Die kartographische Darstellung zeigt Verkehrsbauwerke in einer digitalen Karte 500. In der digitalen Karte werden auch der geographische Startpunkt 10 und der geographische Zielpunkt 20 dargestellt.

In der digitalen Karte 500 sind einige exemplarische geographische Stellen 31, 32, 33, 41, 42, 43, 44, 45 dargestellt. Es sei klar, dass die Anzahl der von dem computerimplementierten Verfahren behandelten geographischen Stellen um ein Vielfaches höher sein kann und dass die Darstellung in Fig. 2 zur besseren Lesbarkeit und zur Vereinfachung des Verständnisses nur eine geringe Anzahl geographischer Stellen 31, 32, 33, 41, 42, 43, 44, 45 beispielhaft darstellt.

Die zahlreichen geographischen Stellen 31, 32, 33, 41, 42, 43, 44, 45 können auf der Basis anderer Schwertransporte ermittelt worden sein. Die einzelnen geographischen Stellen 31, 32, 33, 41, 42, 43, 44, 45 können mit den Schwertransportdaten dieser anderen Schwertransporte verknüpft sein, deren jeweilige Route durch sie verlaufen ist.

In dem computerimplementierten Verfahren werden mehrere geographischen Stellen 31, 32, 33, 41, 42, 43, 44 derart ausgewählt, dass jeder dieser geographischen Stellen 31, 32, 33, 41, 42, 43, 44 wenigstens ein verifiziertes Schwertransportdatum eines anderen, insbesondere bereits durchgeführten, Schwertransports zugeordnet ist, welches zu den Schwertransportdaten des verfahrensgegenständlichen Schwertransports korrespondiert.

Beispielhaft ist hier auch eine geographische Stelle 45 dargestellt, die kein Schwertransportdatum aufweist, das zu denen des verfahrensgegenständlichen Schwertransports korrespondiert. Das kann bedeuten, dass für diese Stelle 45 keine Erfahrungsdaten zur Durchführung eines ähnlichen Schwertransports vorhanden sind. Es besteht also ein vergleichsweise hohes Risiko, dass diese Stelle 45 für den Schwertransport unpassierbar ist. Für das computerimplementierte Verfahren kann diese und andere derartige Stellen 45 nachfolgend nicht weiter berücksichtigt werden.

Die Auswahl der geographischen Stellen 31, 32, 33, 41, 42, 43, 44 kann optional auch solche Stellen umfassen, für die Schwertransportdaten in einer Erfahrungsdatenbank abgespeichert sind, die nicht mehr als eine vorbestimmte Toleranz kleiner sind als die entsprechenden Schwertransportdaten des verfahrensgegenständlichen Schwertransports. Für solche Stellen besteht ein vergleichsweise geringes Risiko, dass sie für den Schwertransport unpassierbar sind.

Es kann zweckmäßig sein, dass die Auswahl der geographischen Stellen 31, 32, 33, 41, 42, 43, 44 begrenzt ist auf solche Stellen, denen wenigsten ein verifiziertes Schwertransportdatum oder ein insbesondere vollständiger Satz verifizierter Schwertransportdaten zugeordnet sind, die wenigstens genauso stark von einem jeweiligen vorbestimmten Normtransportdatum abweichen wie das entsprechende Schwertransportdatum des Schwertransports.

Der Routenvorschlag 50 führt durch eine Untermenge der geographischen Stelle 31, 32, 33. Darüber hinaus können mehrere weitere geographischen Stelle 41, 42, 43, 44 abseits des Routenvorschlags 50 liegen, die ebenfalls mit Schwertransportdaten anderer Schwertransporte verknüpft sind, die mit den Schwertransportdaten des Schwertransports korrespondieren.

Verschiedenen geographischen Stelle 31, 32, 33, 41, 42, 43, 44, 45 kann ein jeweiliger Konfidenzwert zugeordnet werden. Der Konfidenzwert kann beispielsweise die Menge der dieser Stelle zugeordneten verifizierten Schwertransportdaten repräsentieren, die zu dem durchzuführenden Schwertransport korrespondieren. Je höher der Konfidenzwert einer Stelle, desto niedriger ist für diese Stelle das Risiko der Unpassierbarkeit. Beispielsweise weisen die Stellen 42 oder 43 einen wesentlich höheren Konfidenzwert auf als die Stellen 41 oder 44. Insbesondere kann beispielsweise der Konfidenzwert der Stelle 42 höher sein als der Konfidenzwert der Stelle 43, wobei der Konfidenzwert der Stelle 43 höher ist als der Konfidenzwert der Stelle 41, welcher wiederum den Konfidenzwert der Stelle 44 übersteigt.

Beispielsweise kann ein Algorithmus einen Routenvorschlag 50 für eine kürzeste Route oder eine schnellste Route oder dergleichen erstellen, die auch den Konfidenzwert der Stellen 31, 32, 33 berücksichtigt. Es kann beispielsweise vorgesehen sein, dass eine Summe der Konfidenzwerte der vom Routenvorschlag 50 durchquerten Stellen 31, 32, 33 möglichst hoch ist. Alternativ oder Zusätzlich kann vorgesehen sein, dass der Routenvorschlag 50 auf Stellen 31, 32, 33 beschränkt wird, deren Konfidenzwert ein vorbestimmtes Minimum nicht unterschreitet und/oder ein vorbestimmtes Maximum nicht überschreitet. Ein Konfidenzwert-Minimum kann berücksichtigt werden, um das Risiko der Unpassierbarkeit zu vermeiden. Ein Konfidenzwert-Maximum kann berücksichtigt werden, um eine übermäßige Belastung der Verkehrsbauwerke durch Schwertransporte zu vermeiden.

In der digitalen Karte 500 können die Konfidenzwerte der Vielzahl von Stellen beispielsweise farbig dargestellt werden. In dem in Fig. 2 dargestellten Beispiel sind niedrige Konfidenzwerte als Gelbton und hohe Konfidenzwerte als Rotton dargestellt, wobei der Konfidenzwert entsprechend eines gradueller Farbverlaufs angezeigt werden kann.

Fig. 3 zeigt eine andere schematische kartographische Darstellung einer digitalen Karte 500. In der Karte 500 werden verschiedene Routenvorschläge 50, 51, 52 für Streckenverläufe vom Startpunkt 10 zum Zielpunkt 20 dargestellt.

Mithilfe von Fig. 3 soll die Anwendung von Filterparameter und insbesondere Ausschlussparameter veranschaulicht werden. Hier sind ein erster initialer Routenvorschlag 51 durch eine punktierte Linie repräsentiert, und ein zweiter initialer Routenvorschlag 52 durch eine Strich-Punkt-Linie.

Ein initialer Routenvorschlag 51, 52 kann zunächst erzeugt werden, der den Schwertransport von dem geographischen Startpunkt 10 zu dem geographischen Zielpunkt 20 führt. Beim Erstellen eines initialen Routenvorschlags 51, 52 kann der Streckenverlauf ohne Berücksichtigung der besonderen Schwertransportdaten des Schwertransports ermittelt werden, oder zumindest ohne, dass solche geographischen Stellen 31, 32, 33, 41, 42, 43 berücksichtigt werden, für die verifizierte Schwertransportdaten in einer Erfahrungsdatenbank hinterlegt sind.

Das Erzeugen 400 des eigentlichen Routenvorschlags 50 unter Berücksichtigung der Schwertransportdaten und dazu korrespondierender geographischer Stellen kann auf der Grundlage des initialen Routenvorschlags 51, 52 erfolgen. Ein initialer Routenvorschlag kann beispielsweise unter Berücksichtigung der geographischen Stellen 31, 32, 33, 41, 42, 43 modifiziert werden.

Beispielsweise kann als ein Filterparameter, ein Ausschlussparameter definiert sein, der auf ein geographisches Gebiet 60 bezogen ist. Das geographische Gebiet 60 kann beispielsweise ein bestimmtes topographisches Gebiet repräsentieren, wie ein Gebirge, mit starken Steigungen und Gefällen. Wenn der Schwertransport beispielsweise nicht entlang gefährlicher Gebirgspassagen geführt werden soll, kann ein Ausschlussparameter bezüglich des Gebiets 60 definiert werden. Falls ein erster initialer Routenvorschlag 51, der beispielsweise eine kürzeste Strecke vom Startpunkt 10 zum Zielpunkt 20 betreffen kann, vorliegt, der durch das vorbestimmte Gebiet 60 führt, kann mittels des Ausschlussparameters bestimmt werden, dass dieser initiale Routenvorschlag 51 verworfen wird. Stattdessen muss ein anderer Routenvorschlag 50 entwickelt werden, der das Gebiet 60 vollständig umgeht. Alternativ kann ein Filterparameter beispielsweise dahingehend definiert sein, dass die Anzahl von Gebieten mit bestimmten Eigenschaften, die von dem Routenvorschlag durchquert werden, minimiert oder maximiert werden soll.

Gemäß einem weiteren Filterparameter kann ein Ausschlussparameter in Bezug auf wenigstens eine vorbestimmte Auflage definiert werden. Ein zweiter initialer Routenvorschlag 52, der beispielsweise eine schnellste Strecke vom Startpunkt 10 zum Zielpunkt 20 betreffen kann, vorliegt, kann zum Beispiel entlang solcher Streckenabschnitte führen, für die besondere Auflagen beispielsweise zur temporären Ertüchtigung bestimmter Streckenabschnitte definiert sind. Für solche Streckenabschnitte können vorab die jeweiligen geographischen Stellen erfasst werden, denen für verifizierte Schwertransporte mit korrespondierenden Schwertransportdaten eine oder Schwertransportauflagen zugeordnet wurden. Mittels des Ausschlussparameters kann bestimmt werden, dass dieser zweite initiale Routenvorschlag 52 verworfen wird. Stattdessen wird ein anderer Routenvorschlag 50 entwickelt, der ohne technische Maßnahmen im Streckenverlauf auskommt.

Insgesamt ermöglichen es der hierin beanspruchte Gegenstand und seine Ausführungsformen, die Prozesse zur Einrichtung, Steuerung, Prüfung und Durchführung eines Schwertransports hinsichtlich der Effizienz, Genauigkeit und Sicherheit zu verbessern. Insbesondere werden durch den durch den hierin beanspruchten Gegenstand und seine Ausführungsformen der Arbeits-, Zeit- und Kostenaufwand für den Schwertransport gesenkt.

### Bezugszeichenliste

- 1: Schwertransport
- 3: Transportfahrzeug
- 5: Transportgut
- 10: Startpunkt
- 20: Zielpunkt
- 31, 32, 33: Stelle
- 41, 42, 43: Stelle
- 50: Routenvorschlag
- 51, 52: initialer Routenvorschlag
- 60: Gebiet
- 100: Erfassen von Schwertransportdaten
- 200: Erfassen von Start- und Zielpunkt
- 300: Erfassen von Stellen
- 400: Erzeugen eines Routenvorschlags
- 500: digitale Karte

## Patentansprüche

1. Computerimplementiertes Verfahren für einen Schwertransport, umfassend:
Erfassen (100) von Schwertransportdaten des Schwertransports, die mindestens eines von Folgenden enthalten: eine Länge (L), eine Breite (B), eine Höhe (H), einen Wendekreis, ein Gewicht (G) und eine Achslast (G1, G2);
Erfassen (200) eines geographischen Startpunkts (10) des Schwertransports und eines geographischen Zielpunkts (20) des Schwertransports;
Erfassen (300) von mehreren geographischen Stellen (31, 32, 33, 41, 42, 43), die verknüpft sind mit Schwertransportdaten anderer Schwertransporte, die mit den Schwertransportdaten des Schwertransports korrespondieren; und
Erzeugen (400) eines Routenvorschlags (50), der den Schwertransport von dem geographischen Startpunkt (10) durch wenigstens eine der mehreren geographischen Stellen (31, 32, 33) zu dem geographischen Zielpunkt (20) führt.

2. Computerimplementiertes Verfahren nach Anspruch 1, wobei
das Erfassen (300) der mehreren geographischen Stellen (31, 32, 33, 41, 42, 43) umfasst, dass die mehreren geographischen Stellen (31, 32, 33, 41, 42, 43) derart ausgewählt werden, dass jeder geographischen Stelle (31, 32, 33, 41, 42, 43) wenigstens ein korrespondierendes Schwertransportdatum zugeordnet ist.

3. Computerimplementiertes Verfahren nach Anspruch 2, wobei
der Schwertransport einen ersten Satz von Schwertransportdaten aufweist, der wenigstens zwei von folgendem enthält: eine Länge (L), eine Breite (B), eine Höhe (H), einen Wendekreis, ein Gewicht (G) und eine Achslast (G1, G2); und
das Erfassen (300) der mehreren geographischen Stellen (31, 32, 33, 41, 42, 43) umfasst, dass die mehreren geographischen Stellen (31, 32, 33, 41, 42, 43) derart ausgewählt werden, dass jeder geographischen Stelle (31, 32, 33, 41, 42, 43) ein Satz von korrespondierenden Schwertransportdaten zugeordnet ist.

4. Computerimplementiertes Verfahren nach Anspruch 2 oder 3, wobei wenigstens ein korrespondierendes Schwertransportdatum einer geographischen Stelle (31, 32, 33, 41, 42, 43) nicht mehr als eine vorbestimmte Toleranz kleiner ist als das entsprechende Schwertransportdatum des Schwertransports.

5. Computerimplementiertes Verfahren nach Anspruch 2 oder 3, wobei wenigstens ein korrespondierendes Schwertransportdatum einer geographischen Stelle (31, 32, 33, 41, 42, 43) wenigstens genauso stark von einem vorbestimmten Normtransportdatum abweicht wie das entsprechende Schwertransportdatum des Schwertransports.

6. Computerimplementiertes Verfahren nach einem der vorstehenden Ansprüche, wobei wenigstens ein Filterparameter, insbesondere wenigstens ein Ausschlussparameter, vorzugweise bezogen auf wenigstens ein geographisches Gebiet (60) und/oder wenigstens einen Zeitraum, bestimmt wird, und
das Erzeugen (400) des Routenvorschlags (50) unter Maßgabe des wenigstens einen Filterparameters, insbesondere des wenigstens ein Ausschlussparameters, erfolgt.

7. Computerimplementiertes Verfahren nach Anspruch 6, wobei das Erfassen (300) der mehreren geographischen Stellen (31, 32, 33, 41, 42, 43) umfasst, dass diesen Stellen (31, 32, 33, 41, 42, 43) zugeordnete Schwertransportauflagen erfasst werden, und wobei
wenigstens ein Filterparameter, insbesondere wenigstens ein Ausschlussparameter, bezogen auf wenigstens eine Schwertransportauflage, bestimmt wird.

8. Computerimplementiertes Verfahren nach einem der vorstehenden Ansprüche, wobei das Erfassen (300) der mehreren geographischen Stellen (31, 32, 33, 41, 42, 43) umfasst, dass mehrere Routen anderer Schwertransporte, die assoziiert sind mit jeweiligen Schwertransportdaten sowie gegebenenfalls Schwertransportauflagen und/oder Zeiträumen, segmentiert werden in eine Vielzahl von Streckenabschnitten,
wobei die Streckenabschnitte den Stellen (31, 32, 33, 41, 42, 43) mit der gleichen geographischen Position zugeordnet werden.

9. Computerimplementiertes Verfahren nach Anspruch 8, wobei das Erfassen (300) der mehreren geographischen Stellen (31, 32, 33, 41, 42, 43) umfasst, dass eine Teilmenge von den Streckenabschnitten gebildet wird, deren Schwertransportdaten mit den Schwertransportdaten des Schwertransports korrespondieren.

10. Computerimplementiertes Verfahren nach Anspruch 8 oder 9, wobei das Erfassen (300) der mehreren geographischen Stellen (31, 32, 33, 41, 42, 43) umfasst, dass den Stellen (31, 32, 33, 41, 42, 43) ein jeweiliger Konfidenzwert zugeordnet wird, der zur Menge der Streckenabschnitte korreliert, deren Schwertransportdaten mit den Schwertransportdaten des Schwertransports korrespondieren.

11. Computerimplementiertes Verfahren nach Anspruch 10, wobei das Erzeugen (400) des Routenvorschlags die Konfidenzwerte der mehreren geographischen Stellen (31, 32, 33, 41, 42, 43) als, insbesondere additive, multiplikative oder konkave, Metrik berücksichtigt.

12. Computerimplementiertes Verfahren nach einem der vorstehenden Ansprüche, ferner umfassend
kartographisches Darstellen von Verkehrsbauwerken in einer digitalen Karte (500), wobei der geographische Startpunkt (10), insbesondere der Routenvorschlag (50), und der geographische Zielpunkt (20) dargestellt werden,
wobei insbesondere wenigstens ein Filterparameter, insbesondere wenigstens ein Ausschlussparameter, bezogen auf wenigstens ein geographisches Gebiet (60) dargestellt werden und/oder
wobei insbesondere die unterschiedlichen den Verkehrsbauwerken zugeordneten Konfidenzwerte grafisch dargestellt werden.

13. Computerimplementiertes Verfahren nach einem der vorstehenden Ansprüche, wobei ein initialer Routenvorschlag (51, 52) erzeugt wird, der den Schwertransport von dem geographischen Startpunkt (10) unabhängig von den Schwertransportdaten des Schwertransports und/oder unabhängig von den geographischen Stellen (31, 32, 33, 41, 42, 43) zu dem geographischen Zielpunkt (20) führt, und wobei das Erzeugen (400) des Routenvorschlags (50) auf Basis des initialen Routenvorschlags (51, 52) erfolgt.

14. Computerimplementiertes Verfahren nach einem der vorstehenden Ansprüche, ferner umfassend:
Speichern des Routenvorschlags (50) als einen ersten Datensatz mit einer ersten Datenstruktur, die zur kartographischen Darstellung in der digitalen Karte (500) eingerichtet ist; und /oder
Speichern des Routenvorschlags (50) als einen zweiten Datensatz mit einer zweiten Datenstruktur, die eingerichtet ist, ein elektronisches Dokument mit Zeichenfolgen zu füllen.

15. Verfahren zum Durchführen eines Schwertransports gemäß dem Routenvorschlag (50), der mit dem computerimplementiertes Verfahren nach einem der vorstehenden Ansprüche erzeugt wurde.
